# EUROPÄISCHE PATENTSCHRIFT

(11) **EP 1 117 576 B1**
(45) Veröffentlichungstag und Bekanntmachung des Hinweises auf die Patenterteilung: **07.12.2005**
(21) Anmeldenummer: 00949117.6
(22) Anmeldetag: 15.06.2000
(51) Int. Cl.: B60S 1/40

(54) **WISCHVORRICHTUNG FÜR SCHEIBEN VON KRAFTFAHRZEUGEN MIT EINEM ZWISCHEN UMKEHRLAGEN BEWEGBAREN, ZUR SCHEIBE BELASTETEN WISCHERARM**
WIPER DEVICE FOR MOTOR VEHICLE WINDOWS COMPRISING A WIPER ARM WHICH CAN MOVE BETWEEN RETURN POSITIONS AND WHICH IS LOADED TOWARD THE WINDOW
DISPOSITIF D'ESSUIE-GLACE POUR VITRES D'AUTOMOBILES COMPORTANT UN BRAS D'ESSUIE-GLACE SOLLICITE EN DIRECTION DE LA VITRE ET DEPLA ABLE ENTRE DES POSITIONS REVERSIBLES

(30) Priorität: 30.07.1999 DE 19935860
(43) Veröffentlichungstag der Anmeldung: 25.07.2001
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE2000/001988
(87) Internationale Veröffentlichungsnummer: WO 2001/008949

(56) Entgegenhaltungen:
- DE-A- 1 905 352
- DE-A- 19 729 862
- DE-A- 19 757 872
- US-A- 4 293 974

## Beschreibung

### Stand der Technik

Bei Wischvorrichtungen der im Oberbegriff des Anspruchs 1 bezeichneten Art soll durch die Begrenzung der quer zur Wischrichtung notwendigen Schwingbewegung verhindert werden, daß bei einer bestimmten Montagestellung, wenn das Wischblatt zusammen mit dem Wischerarm von der Scheibe abgehoben ist, sich das Wischblatt bei unsachgemäßer Handhabung um die Schwingachse bewegt, bis seine Lagerzapfen selbständig durch die Öffnung der Lagerausnehmungen gelangen, so daß sich das Wischblatt ungewollt vom Wischerarm löst, herunterfällt und beispielsweise die Lackierung des Fahrzeuges beschädigt.

Die Erfindung geht aus von einer Wischvorrichtung nach dem Oberbegriff des Anspruchs 1. Bei bekannten Wischvorrichtungen dieser Art (DE-AS 19 05 352 und US-A-4 293 174) taucht das freie Ende des Wischerarms zwischen mit Abstand voneinander befindliche Wangen eines zum Wischblatt gehörenden Traggestells, aus deren einander zugewandten Innenseiten gegeneinander gerichtete, warzenartige Stütznasen ragen, welche nach der Montage des Wischblatts am Wischerarm in an Führungswänden des Wischerarms vorhandenen Langlöchern bewegbar sind, durch deren Länge die Schwingbewegung begrenzt ist. Die Lösung des eingangs dargelegten Problems erfordert zur Realisierung der Begrenzungsmittel somit bestimmte Konstruktionsmerkmale sowohl beim Wischblatt (Traggestellwangen) als auch beim Wischerarm (Anordnung zwischen den Wangen).

### Vorteile der Erfindung

Bei dem erfindungsgemäßen Wischblatt mit den kennzeichneten Merkmalen des Anspruchs 1 ist die Ausgestaltung von Wischblatt und Wischerarm belanglos, weil der elastische Ansatz des Wischblatts mit seiner Anschlagschulter und die Gegenschulter des Wischerarms auf keine besonderen konstruktiven Merkmale der Wischvorrichtung angewiesen ist. Eine besonders kostengünstige Realisierung des Ansatzes und der an diesem vorhandenen Anschlagschulter wird erreicht, wenn die Schwinggelenkzapfen an einem zum Wischblatt gehörenden, aus einem elastischen Kunststoff gefertigten Bauelement angeordnet sind und wenn weiter der Ansatz einstückig mit dem Bauelement verbunden ist. Die Bildung der Anschlagschulter ergibt sich auf einfache Weise dadurch, daß diese an einem Vorsprung des Ansatzes ausgebildet ist, der zumindest annähernd zur Schwingachse ausgerichtet ist.

Eine weitere Reduzierung der Herstellungskosten für die Wischvorrichtung ergibt sich, wenn die Gegenschulter des Wischerarms an einem am freien Ende des Wischerarms angeordneten, die zum Schwinggelenk gehörenden Lagerausnehmungen aufweisenden Bauteil angeordnet ist.

Die Anwendung der Schwingbewegungsbegrenzung empfiehlt sich besonders bei Wischvorrichtungen, bei denen die Öffnungen der Lagerausnehmungen von der Schwingachse aus im wesentlichen parallel zur zu wischenden Scheibe ausgerichtet sind.

Auch ergeben sich entscheidende Vorteile hinsichtlich der Bauhöhe der Wischvorrichtung dadurch, daß das Wischblatt in Richtung der Schwingachse gesehen neben dem Wischerarm angeordnet ist.

Weitere Vorteile bezüglich der Bauhöhe der Wischvorrichtung werden erreicht, wenn das zum wischblatt gehörende Bauelement im Mittelabschnitt eines bandartig langgestreckten Trägers angeordnet ist, an dessen einer Bandfläche ein langgestrecktes, an der Scheibe anlegbares Wischelement befestigt ist.

Weitere vorteilhafte Weiterbildung und Ausgestaltungen der Erfindung sind in der nachfolgenden Beschreibung eines in der dazugehörigen Zeichnung dargestellten Ausführungsbeispiels angegeben.

### Zeichnung

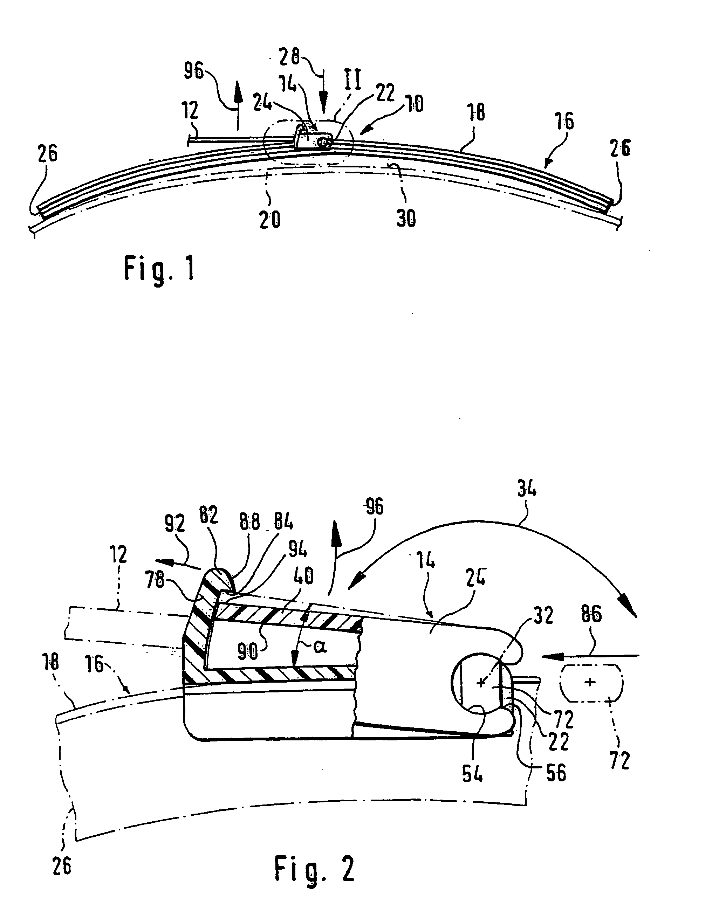

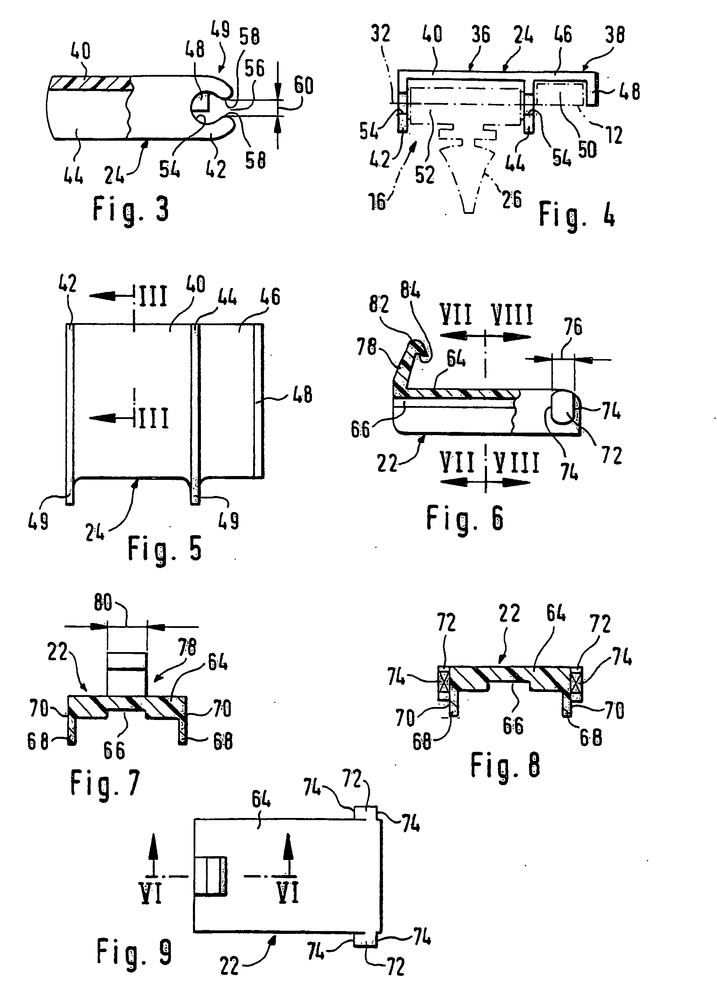

In der Zeichnung zeigen: Figur 1 eine Seitenansicht einer Wischvorrichtung mit einem Wischblatt und einem Wischerarm, Figur 2 eine vergrößerte Darstellung einer in Figur 1 mit II bezeichneten Einzelheit, in welche eine Vorrichtung zum Anschließen des Wischblatts am Wischerarm teilweise geschnitten ist, Figur 3 das wischerarmseitige Teil der Anschlußvorrichtung in Seitenansicht gemäß Figur 2, verkleinert dargestellt wobei der Schnittverlauf der Linie III-III in Figur 5 folgt, Figur 4 eine Frontansicht des Vorrichtungteils gemäß Figur 3, in welche die Querschnitte des Wischblatts und Wischerarms strichpunktiert eingezeichnet sind, Figur 5 eine Ansicht des wischblattseitigen Teils der Anschlußvorrichtung gemäß Figur 4 von unten gesehen, Figur 6 das wischblattseitige Teil der Anschlußvorrichtung in Seitenansicht gemäß Figur 2 verkleinert dargestellt wobei der Schnittverlauf der Linie VI-VI in Figur 9 folgt, Figur 7 einen Schnitt entlang der Linie VII-VII durch das Teil gemäß Figur 6, Figur 8 einen Schnitt entlang der Linie VIII-VIII durch das Teil gemäß Figur 6 und Figur 9 eine Draufsicht auf das Teil gemäß Figur 6.

### Beschreibung des Ausführungsbeispiels

Eine in Figur 1 dargestellt Wischvorrichtung 10 weist einen angetriebenen, zwischen Umkehrlagen bewegbaren Wischerarm 12 auf, an dessen freien Ende über eine Anschlußvorrichtung 14 ein Wischblatt 16 lösbar angelenkt ist. Das Wischblatt 16 weist ein bandartig langgestrecktes, federelastisches Tragelement 18 auf, an dessen von der zu wischenden Scheibe 20 abgewandten Bandfläche und im Mittelabschnitt des Wischblatts das wischblattseitige Teil 22 der Anschlußvorrichtung 14 angeordnet ist. Das andere, wischerarmseitige Teil 24 der Anschlußvorrichtung 14 ist fest mit dem freien Ende des Wischerarms 12 verbunden. An der der Scheibe 20 zugewandten unteren Bandfläche des Tragelements 18 ist eine langgestreckte, gummielastische Wischleiste 26 längsachsenparallel angeordnet. Der Wischerarm 12 ist in Richtung des Pfeiles 28 zur Scheibe 20 belastet, deren zu wischende Oberfläche in Figur 1 durch eine strichpunktierte Linie 30 angedeutet ist. Da die strichpunktierte Linie 30 die stärkste Krümmung der Scheibenoberfläche darstellen soll ist klar ersichtlich, daß die Krümmung des mit seinen beiden Enden an der Scheibe 20 anliegenden Wischblatts 16 stärker ist als die maximale Scheibenkrümmung. Unter dem Anpressdruck (Pfeil 28) legt sich das Wischblatt 16 mit einer Wischlippe 27 seiner Wischleiste 26 über seine gesamte Länge an der Scheibenoberfläche 30 an. Dabei baut sich im bandartigen, federelastischen Tragelement 18 eine Spannung auf, welche für eine ordnungsgemäße Anlage der Wischleiste 26 beziehungsweise der Wischlippe 27 über deren gesamte Länge an der Kraftfahrzeugscheibe 20 sorgt. Weil die in aller Regel sphärisch gekrümmte Scheibe 20 nicht ein Abschnitt einer Kugeloberfläche darstellt, muß sich das Wischblatt 16 gegenüber dem Wischerarm 12 während seiner zur Längserstreckung des Wischblatts quer verlaufenden Wischbewegung ständig dem Verlauf der Scheibenoberläche 30 anpassen können. Deshalb ist die Anschlußvorrichtung 14 gleichzeitig als Gelenkverbindung zwischen Wischblatt 16 und Wischerarm 12 ausgebildet. Die Achse 32 dieser Gelenkverbindung weist im wesentlichen in Wischrichtung, so daß das Wischblatt 16 gegenüber dem Wischerarm 12 eine Schwingbewegung entsprechend dem Doppelpfeil 34 in Figur 2 ausführen kann, welche stets die notwendige Anlage des Wischblatts 16 über dessen gesamte Länge an der Scheibenoberfläche 30 sicherstellt.

Im Folgenden soll nun auf-die besondere Ausgestaltung der auch als Anschlußkupplung zu bezeichnenden Anschlußvorrichtung 14 näher eingegangen werden. Der Aufbau des wischerarmseitigen Bau- oder Kupplungsteils 24 ist aus den Figuren 3 bis 5 ersichtlich. Figur 4 zeigt, daß das Kupplungsteil 24 einen im Querschnitt U-förmigen Bereich 36 aufweist, der seitlich in einem weiteren, L-förmigen Bereich 38 übergeht. Der U-förmige Bereich 36 weist somit eine plattenartige U-Basis 40 auf, die in zwei mit Abstand voneinander und parallel zueinander liegende U-Schenkel 42, 44 übergeht. Die U-Basis 40 setzt sich über den U-Schenkel 44 hinausgehend fort und bildet somit den einen Schenkel 46 der L-Form, der dann mit Abstand vom U-Schenkel 44 in den anderen L-Schenkel 48 übergeht, welcher in seiner Längserstreckung im wesentlichen parallel zum Verlauf U-Schenkel 42 und 44 liegt. Der L-förmige Bereich 38 des Kupplungsteils 24 bildet somit zusammen mit dem U-Schenkel 44 einen Kanal 50, welcher zur Aufnahme des freien Endes des Wischerarms 12 dient. Zwischen den beiden U-Schenkeln 42 und 44 ergibt sich ebenfalls ein Aufnahmekanal 52 für das Wischblatt 16, zu dem auch das wischblattseitige Kupplungsteil 22 gehört. In Figur 4 sind sowohl die Querschnittskonturen des Wischerarms 12 als auch des Wischblatts 16 strichpunktiert eingezeichnet worden. Dort ist erkennbar, daß das Wischblatt 16 in Richtung der Schwingachse 32 gesehen neben dem Wischerarm 12 angeordnet ist. Weiter ist insbesondere aus Figur 5 ersichtlich, daß sich die beiden U-Schenkel 42 und 44 mit einer Verlängerung 49 über die U-Basis 40 und auch über den einen L-Schenkel 46 hinaus erstrecken. In diesem Bereich 49 sind diese beiden Schenkel mit jeweils einer Querbohrung 54 versehen, deren Bohrungsachsen miteinander fluchten (Figur 4). Die beiden Querbohrungen 54 sind jeweils über einen Montagekanal 56 randoffen (Figur 3). Die beiden Kanalwände 58 liegen mit einem Abstand 60 voneinander, der kleiner ist als der Durchmesser der beiden Querbohrungen 54 und bilden somit eine Engstelle im Montagekanal 56, der zu den Querbohrungen oder Ausnehmungen 54 führt.

Der Aufbau und die Ausgestaltung des wischblattseitigen Kupplungsteils 22 wird im Folgenden anhand der Figuren 6 bis 9 erläutert. Wie insbesondere die Figuren 7 und 8 zeigen, ist das wischblattseitige Kupplungsteil 22 ein Bauelement, welches ebenfalls einen im wesentlichen U-förmigen Querschnitt hat. Seine U-Basisplatte 64 ist vergleichsweise dick ausgebildet und an ihrer Innenseite mit einer Längsnut 66 versehen, die zur Aufnahme besonderer Ausgestaltungsformen der Wischleiste 26 und/oder des Tragelements 18 dienen kann. Die beiden U-Wandschenkel 68 sind verhältnismäßig dünn ausgebildet und dienen in erster Linie zur seitlichen Führung des Tragelements 18 und der von diesem gehaltenen Wischleiste 26. Die Abstände der jeweiligen Außenseiten der beiden U-Wandschenkel 68 voneinander ist so auf das Abstandsmaß zwischen den einander zugewandten Innenseite der U-Schenkel 42 und 44 des wischerarmseitigen Kupplungsteils 24 abgestimmt, daß ein leichtgängiges, spielarmes Bewegen des Wischblatts 16 - zudem selbstverständlich das wischblattseitige Kupplungsteil 22 gehört - am Wischerarm 12 beziehungsweise an dessen Kupplungsteil 24 gewährleistet ist. An den beiden von einander abgewandten Außenseiten 70 der beiden U-Wandschenkel 68 beziehungsweise der U-Basisplatte 64 ist jeweils ein Lagerzapfen 72 angeordnet, der aus den Außenseiten 70 heraus vorspringt. Die Längsachsen der beiden Lagerzapfen 72 fluchten miteinander. Sie bilden die Schwingachse 32, um welche das Kupplungsteil 22 beziehungsweise das Wischblatt 16 gegenüber dem Wischerarm 12 in Richtung des Doppelpfeiles 34 (Figur 2) schwingen kann, wenn die Lagerzapfen 72 den ihnen zugeordneten Quer- oder Lagerbohrungen 54 des wischerarmseitigen Kupplungsteil 24 liegen. Um dieses zu erreichen, sind die beiden Lagerzapfen 72 im Querschnitt unrund ausgebildet. Dazu weisen sie zwei zueinander parallel-liegende Anflachungen 74 auf wobei die Abstände 76 der beiden Anflachungen 74 eines Lagerzapfens 72 so bemessen sind, daß diese über die Montagekanäle 56 der Lagerbohrungen 54 in diese eingeführt werden können, wenn das wischblattseitige Kupplungsteil 22 beziehungsweise das gesamte Wischblatt 16 bezüglich des Wischerarms 12 - zu dem natürlich auch das Kupplungsteil 24 gehört - entsprechend verdreht wird. An der von der Längsnut 66 abgewandten Außenseite der U-Basisplatte 64 ist das wischblattseitige Kupplungsteil 22 mit einem zungenartigen Ansatz 78 versehen, der einstückig mit dem aus einem elastischen Kunststoff gefertigten wischblattseitigen Kupplungsteil 22 verbunden ist. Beim Ausführungsbeispiel ist die Breite 80 des Ansatzes 78 kleiner als die über die beiden Außenseiten 70 gemessene Breite des Kupplungsteils 22 (Figur 7). Am freien Ende des Ansatzes 78 ist dieser mit einem hakenartigen Vorsprung 82 versehen (Figur 6), dessen im wesentlichen der U-Basisplatte 64 zugewandte Hakenfläche 84 zumindest annähernd zu den Achsen 32 der beiden Lagerzapfen 72 hin ausgerichtet ist.

Der Zusammenbau der Wischvorrichtungsteile 12 und 16 sowie deren Wirkungsweise soll nun anhand von Figur 2 beschrieben werden. Dazu ist das Wischblatt 16 zunächst in eine Position gegenüber dem in Richtung des Pfeiles 96 von der Scheibe weggeklappten Wischerarm 12 zu bringen, in welcher seine Lagerzapfen 72 die in Figur 2 strichpunktiert dargestellte Position zum Wischerarm beziehungsweise zu dessen Kupplungsteil 24 einnehmen. Danach wird das Wischblatt in Richtung des Pfeiles 86 bewegt, so daß seine Lagerzapfen 72 durch den Montagekanal 56 des Kupplungsteils 24 gelangen können. Danach wird das Wischblatt 16 gegenüber dem Wischerarm 12 so verdreht, daß es seine in Figur 2 strichpunktiert dargestellte Arbeitsposition einnimmt, in welcher die Lagerzapfen 72 - die nun die Gelenkzapfen des Schwinggelenks bilden - nicht mehr aus ihren Schwinggelenk-Lagerbohrungen 54 gelangen können. Während dieser Verdrehbewegung des Wischblatts, welche ähnlich der Schwingbewegung 34 ist, stößt der Vorsprung 82 des Ansatzes 78 mit einer Anlaufschrägfläche 88 gegen die Innenseite 90 der U-Basis 40 des Kupplungsteils 24, so daß eine Kraftkomponente wirksam wird, welche den elastisch auslenkbaren Ansatz 78 vorübergehend in Richtung des Pfeiles 92 auslenkt, bis die Hakenfläche 84 des Vorsprungs 82 der Außenseite 94 der U-Basis 40 der Kupplungsteils 24 gegenüberliegt (Figur 2). In dieser Position federt der Ansatz 78 selbsttätig entgegen dem Pfeil 92 in seine Ausgangsposition zurück, hintergreift die Außenseite 94 und sichert das Wischblatt 16 am Wischerarm 12 gegen unbeabsichtigte Demontage, weil die Länge des Ansatzes bis zur Hakenfläche 84 lediglich ein Verdrehen des Wischblatts gegen den Wischerarm um einen Winkel α von circa 15 Grad zuläßt, zur Demontage aber eine Verdrehung von etwa 90 Grad erforderlich ist. Die Festlegung des Winkels α wird von Fall zu Fall so getroffen, daß die zur ordnungsgemäßen Reinigung der Scheibe erforderliche Größe der Schwingbewegung (Pfeil 34) möglich ist. Zur Begrenzung der Schwingbewegung ist nur einseitig eine besondere Ausbildung erforderlich, weil die andere Begrenzung durch das Wischblatt und den Wischerarm bzw. durch das mit diesen verbundenen Teilen 22 bzw. 24 direkt übernommen wird. Wenn das montierte Wischblat 16 vom Wischerarm 12 abgenommen werden soll, muß der Ansatz 78 manuell in Richtung des Pfeiles 92 ausgelenkt werden, bis der die Gegenschulter 94 an der Außenseite der U-Basis 40 mit seiner Hakenfläche 84 hintergreifende Vorsprung 82 des Ansatzes 78 ein entsprechendes Verdrehen des Wischblatts 16 gegenüber dem Wischerarm 12 zuläßt und die Lagerzapfen 72 in die in Figur 2 strichpunktiert gezeichnete Position gelangen, in welcher das Wischblatt entgegen der Richtung des Pfeiles 86 vom Wischerarm gelöst werden kann.

Wie die Figuren 1 und 2 zeigen, sind die den jeweiligen Montagekanal 56 bildenden Öffnungen der Lagerbohrungen von der Schwingachse 32 aus im wesentlichen parallel zur zu wischenden Scheibe 20 ausgerichtet. Zur Montage des Wischblatts 16 an den Wischerarm 12 beziehungsweise zur Demontage des Wischblatts vom Wischerarm ist es also erforderlich, daß dieser quer zur Wischrichtung aus seiner Arbeitsposition in eine Montageposition gebracht wird.

Das Wischblatt 16 ist also mit einem sich zumindest annähernd in Schwingrichtung (Doppelpfeil 34) erstreckenden, elastisch auslenkbaren, zungenartigen Ansatz 78 versehen, an dessen freien Ende eine Anschlagschulter 84 (Hakenfläche) angeordnet ist, welche bei montiertem Wischblatt eine am Wischerarm 12 vorhandene Gegenschulter 94 (Außenseite der U-Basis 40) derart hintergreift, daß Anschlagschulter und Gegenschulter die Mittel zum Begrenzen der Schwingbewegung (Doppelpfeil 34) bilden.

## Patentansprüche

1. Wischvorrichtung (10) für Scheiben (20) von Kraftfahrzeugen
mit einem zwischen Umkehrlagen bewegbaren, zur Scheibe (20) belasteten Wischerarm (12), an dessen freien Ende ein um eine in Wischrichtung weisende Achse (32) schwingbares, langgestrecktes Wischblatt (16) angelenkt und zusammen mit dem Wischerarm quer zur Wischrichtung aus seiner Arbeitsposition in eine Montageposition bewegbar ist, wobei die als Lagerzapfen (72) ausgebildete Achse (32) in randoffenen Ausnehmungen (54) des Wischerarms geführt ist und
mit Mitteln zum Begrenzen der Schwingbewegung (Doppelpfeil 34), die mindestens eine Anschlagschulter am Wischblatt und eine am Wischerarm angeordnete Gegenschulter umfassen,
**dadurch gekennzeichnet,**
**dass** das Wischblatt (16) mit einem sich zumindest annähernd in Schwingrichtung (Doppelpfeil 34) erstreckenden, elastisch auslenkbaren, zungenartigen Ansatz (78) versehen ist, an dessen freien Ende die Anschlagschulter (84) angeordnet ist, welche bei montiertem Wischblatt die am Wischerarm vorhandene Gegenschulter(94) derart hintergreift, dass die Anschlagschulter (84) und die Gegenschulter (94) die Begrenzungsmittel bilden und
**dass** der Lagerzapfen (72) an einem zum Wischblatt (16) gehörenden, aus einem elastischen Kunststoff gefertigten Bauelement (22) angeordnet ist und der Ansatz (78) einstückig mit diesem Bauelement verbunden ist.

2. Wischvorrichtung nach Anspruch 1, **dadurch gekennzeichnet, daß** der Lagerzapfen als zwei zum Schwinggelenk gehörenden, aus den Längsseiten des Wiscnblatts (16) ragenden, miteinander fluchtenden, im Querschnitt unrunden Lagerzapfen ausgebildet ist.

3. Wischvorrichtung nach Anspruch 2, **dadurch gekennzeichnet, daß** die Anschlagschulter (84) an einem Vorsprung (82) des Ansatzes (78) ausgebildet ist, der zumindest annähernd zur Schwingachse (32) hin ausgerichtet ist.

4. Wischvorrichtung nach einem der Ansprüche 1 bis 3, **dadurch gekennzeichnet, daß** die Gegenschulter (94) des Wischerarms (12) an einem am freien Ende des Wischerarms (12) angeordneten Bauteil (24) angeordnet ist, das die zum Schwinggelenk gehörenden Lagerausnehmungen (54) aufweist.

5. Wischvorrichtung nach einem der Ansprüche 1 bis 4, **dadurch gekennzeichnet, daß** die Öffnungen (52) der Lagerbohrungen (54) von der Schwingachse (32) aus im wesentlichen parallel zur zu wischenden Scheibe (20) angeordnet ist.

6. Wischvorrichtung nach einem der Ansprüche 1 bis 5, **dadurch gekennzeichnet, daß** das Wischblatt (16) in Richtung der Schwingachse (32) gesehen neben dem Wischerarm (12) angeordnet ist.

7. Wischvorrichtung nach einem der Ansprüche 1 bis 6, **dadurch gekennzeichnet, daß** das zum Wischblatt (16) gehörende Bauelement (22) im Mittelabschnitt eines bandartig langgestreckten Trägers (18) angeordnet ist, an dessen einer Bandfläche ein langgestrecktes, an der Scheibe (20) anlegbares wischelement (26) befestigt ist.

## Claims

1. Wiping apparatus (10) for panes (20) of motor vehicles, having a wiper arm (12) which can be moved between reversing positions, is stressed towards the pane (20) and at the free end of which an elongate wiper blade (16) which can swing about an axle (32), which points in the wiping direction, is articulated and can be moved, together with the wiper arm, from its working position into a mounting position transversely with respect to the wiping direction, the axle (32) which is configured as a bearing journal (72) being guided in recesses (54) of the wiper arm which are open at the edges, and having means for limiting the swinging movement (double arrow 34), which means surround at least one stop shoulder on the wiper blade and one mating shoulder which is arranged on the wiper arm, **characterized in that** the wiper blade (16) is provided with a tongue-like extension (78) which extends at least approximately in the swinging direction (double arrow 34), can be deflected elastically and at the free end of which the stop shoulder (84) is arranged which, when the wiping blade is mounted, engages behind the mating shoulder (94) which is present on the wiper arm, in such a way that the stop shoulder (84) and the mating shoulder (94) form the limiting means, and **in that** the bearing journal (72) is arranged on a component (22) which belongs to the wiper blade (16) and is manufactured from an elastic plastic, and the extension (78) is connected integrally to the said component.

2. Wiping apparatus according to Claim 1, **characterized in that** the bearing journal is configured as two bearing journals which belong to the swinging joint, protrude from the longitudinal sides of the wiper blade (16), are aligned flush with one another and the cross sections of which are non-circular.

3. Wiping apparatus according to Claim 2, **characterized in that** the stop shoulder (84) is formed on a projection (82) of the extension (78) which is oriented at least approximately towards the swing axle (32).

4. Wiping apparatus according to one of Claims 1 to 3, **characterized in that** the mating shoulder (94) of the wiper arm (12) is arranged on a component (24) which is arranged at the free end of the wiper arm (12) and which has the bearing recesses (54) which belong to the swinging joint.

5. Wiping apparatus according to one of Claims 1 to 4, **characterized in that** the openings (52) of the bearing holes (54) are arranged, starting from the swing axle (32), substantially parallel to the pane (20) which is to be wiped.

6. Wiping apparatus according to one of Claims 1 to 5, **characterized in that** the wiper blade (16) is arranged next to the wiper arm (12), as viewed in the direction of the swing axle (32).

7. Wiping apparatus according to one of Claims 1 to 6, **characterized in that** the component (22) which belongs to the wiper blade (16) is arranged in the centre section of a carrier (18) which is elongate in the manner of a belt and to one belt surface of which an elongate wiping element (26) which can be placed against the pane (20) is fastened.

## Revendications

1. Dispositif d'essuyage (10) pour des vitres (20) de véhicules automobiles comportant un bras d'essuie-glace (12) mobile entre des positions d'inversion et appliqué contre la vitre (20), l'extrémité libre du bras portant de manière articulée un balai d'essuie-glace (16) allongé, susceptible d'osciller autour d'un axe (32) dirigé dans la direction d'essuyage et mobile avec le bras d'essuyage transversalement à la direction d'essuyage entre sa position de travail et une position de montage,
l'axe (32) en forme de tourillon de palier (72) étant guidé dans des cavités à bord ouvert (54) du bras d'essuie-glace, et
des moyens limitant le mouvement d'oscillation (double flèche 34) comprenant au moins un épaulement de butée sur le balai d'essuie-glace et un contre épaulement sur le bras d'essuie-glace,
**caractérisé en ce que**
le balai d'essuie-glace (16) comporte un prolongement (78) en forme de languette susceptible d'être dévié élastiquement et s'étendant au moins sensiblement dans la direction d'oscillation (double flèche 34), l'extrémité libre du prolongement portant l'épaulement de butée (84), vient prendre derrière le contre-épaulement (94) du bras d'essuie-glace lorsque le balai est monté pour que l'épaulement de butée (84) et le contre-épaulement (94) forment les moyens de limitation, et
le tourillon de palier (72) est prévu sur un composant (22) fabriqué en matière plastique élastique et faisant partie du balai d'essuie-glace (16), et le prolongement (78) fait corps avec ce composant.

2. Dispositif d'essuie-glace selon la revendication 1,
**caractérisé en ce que**
le tourillon de palier est réalisé sous la forme de deux tourillons de palier de section non circulaire, faisant partie de l'articulation d'oscillation, et alignés l'un sur l'autre en partant des grands côtés du balai d'essuie-glace (16).

3. Dispositif d'essuie-glace selon la revendication 2,
**caractérisé en ce que**
l'épaulement de butée (84) est réalisé sur une partie en saillie (82) du prolongement (78) dirigée au moins sensiblement vers l'axe d'oscillation (32).

4. Dispositif d'essuie-glace selon l'une des revendications 1 à 3,
**caractérisé en ce que**
le contre-épaulement (94) du bras d'essuie-glace (12) est prévu sur un composant (24) à l'extrémité libre du bras d'essuie-glace (12), ce composant ayant des cavités de palier (54) faisant partie de l'articulation d'oscillation.

5. Dispositif d'essuie-glace selon l'une des revendications 1 à 4,
**caractérisé en ce que**
les ouvertures (52) des perçages de palier (54) partant de l'axe d'oscillation (32) sont essentiellement parallèles à la vitre (20) à essuyer.

6. Dispositif d'essuie-glace selon l'une des revendications 1 à 5,
**caractérisé en ce que**
le balai d'essuie-glace (16) est situé à côté du bras d'essuyage (12) lorsqu'on regarde dans la direction de l'axe d'oscillation (32).

7. Dispositif d'essuie-glace selon l'une des revendications 1 à 6,
**caractérisé en ce que**
le composant (22) faisant partie du balai d'essuie-glace (16) est prévu dans le segment central d'un support allongé (18) en forme de ruban et dont une surface de ruban porte solidairement le balai d'essuie-glace (26) allongé qui s'applique contre la vitre (20).
